# FASCICULE DE BREVET EUROPEEN

(11) **EP 2 001 719 B1**
(45) Date de publication et mention de la délivrance du brevet: **18.08.2010**
(21) Numéro de dépôt: 07731840.0
(22) Date de dépôt: 28.03.2007
(51) Int. Cl.: B60W 20/00

(54) **PROCEDE DE TRANSMISSION DE PUISSANCE**
KRAFTÜBERTRAGUNGSVERFAHREN
POWER TRANSMISSION METHOD

(30) Priorité: 05.04.2006 FR 0603001
(43) Date de publication de la demande: 17.12.2008
(73) Titulaire: PEUGEOT CITROËN AUTOMOBILES S.A., 78140 Vélizy Villacoublay (FR)
(72) Inventeur: BESNARD, Sébastien, SCEAUX 92330 (FR); ROBART, Nicolas, 92130 Issy-les-moulineaux (FR)
(86) Numéro de dépôt international: PCT/FR2007/051034
(87) Numéro de publication internationale: WO 2007/113438

(56) Documents cités:
- WO-A-98/31559
- FR-A1- 2 832 357

## Description

L'invention concerne un procédé de transmission de puissance mettant en oeuvre un dispositif de transmission de puissance hybride multi mode. L'invention trouve une application particulièrement avantageuse dans le domaine des véhicules automobiles. Le dispositif de transmission reçoit de la puissance mécanique provenant de plusieurs sources comme par exemple un moteur thermique et plusieurs moteurs électriques et transmet cette puissance vers les roues motrices du véhicule.

On connaît des dispositifs de transmission pour véhicules hybrides qui comportent un moteur thermique, deux machines électriques, et un, deux, ou plusieurs trains épicycloïdaux reliés entre eux à l'intérieur d'un ensemble mécanique. Un exemple d'un tel dispositif est décrit dans la demande de brevet français FR-A-2832357. Avec de tels dispositifs de transmission, la puissance du moteur thermique peut être soit transmise directement aux roues, soit dérivée en passant par une chaîne électrique.

La chaîne électrique relie les machines électriques susceptibles de se comporter en moteur ou en générateur selon des valeurs d'énergies reçues électriquement et / ou mécaniquement respectivement sur leurs bornes et leur arbre. La puissance dérivée est retransmise aux roues du véhicule ou stockée, le cas échéant, dans un système de stockage. Cette puissance dérivée permet d'adapter précisément le couple appliqué aux roues du véhicule à celui demandé par un conducteur, tout en adaptant également précisément les couple et régime du moteur thermique de façon à optimiser son rendement.

En outre, la chaîne électrique comporte notamment un premier onduleur, un deuxième onduleur, ainsi qu'un bus électrique. Dans la pratique, ce bus électrique est un bus à tension continue.

Lorsqu'une des machines électriques se comporte en générateur, les signaux de tension alternative observables entre ses phases sont transformés en un signal de tension continue observable sur le bus, par l'onduleur associé à cette machine. Lorsqu'une des machines se comporte en moteur, le signal de tension continue observable sur le bus est transformé en signaux de tension alternative et déphasés par l'onduleur associé à cette machine. Ces signaux de tension sont appliqués sur les phases de la machine qui fonctionne en moteur. Dans le cas où aucun système de stockage n'est relié au bus, l'énergie produite par une des machines est automatiquement consommée par l'autre machine. En variante, un système de stockage, tel qu'une batterie ou un super condensateur, est relié au bus. Les deux machines peuvent alors fonctionner simultanément en générateur ou en moteur.

Dans le document FR-A-2832357 est décrit un dispositif selon le préambule de la revendication 1 susceptible de fonctionner dans deux modes de fonctionnement différents. Dans un premier mode, l'arbre d'une des machines électriques est relié à l'arbre de roues, tandis que dans un deuxième mode, cet arbre est relié à un élément d'un des trains épicycloïdaux. Le choix du mode est fait en fonction de la vitesse de rotation de l'arbre de roues et de l'élément du train. En effet, l'arbre de la machine électrique est de préférence relié à l'élément qui tourne le moins vite des deux (aux rapports des démultiplications intermédiaires près). Comme une puissance dérivée dans la chaîne électrique est égale à une vitesse de rotation d'une machine multipliée par un couple, le passage d'un mode à un autre permet de limiter la puissance dérivée dans la chaîne électrique. En limitant la puissance à l'intérieur de la chaîne électrique, il est possible de limiter la taille des machines électriques utilisées.

Les passages d'un mode de fonctionnement à l'autre se font en désaccouplant une machine électrique d'un arbre de départ puis en réaccouplant cette même machine à un arbre de destination. On désaccouple par exemple une machine électrique de l'arbre de roues pour la réaccoupler à un élément des trains épicycloïdaux.

On se place dans le cas général où l'arbre de départ et l'arbre de destination ont des régimes différents. Il n'est par conséquent pas envisageable de lier la machine électrique sur les arbres de départ et de destination en même temps. Il est donc nécessaire de passer par une phase intermédiaire dans laquelle la machine électrique n'est plus liée à la transmission (liée ni à l'arbre de départ, ni à l'arbre de destination). Durant cette phase intermédiaire, la machine électrique ne fournit aucune puissance aux roues du véhicule. Ceci entraîne une modification de la puissance de sortie du dispositif de transmission et donc du couple transmis aux roues du véhicule.

L'invention vise à pallier ce problème en proposant un nouveau procédé de transmission de puissance dans lequel au cours du changement de mode de fonctionnement du dispositif, la puissance de sortie du dispositif reste linéaire. Par puissance restant linéaire, on entend une évolution de la valeur de la puissance sans à-coup. En première approximation, on peut considérer que la puissance de sortie reste sensiblement constante durant le changement de mode de fonctionnement du dispositif.

A cet effet, l'invention a pour objet un procédé de transmission de puissance dans lequel on met en oeuvre un dispositif de transmission recevant de la puissance mécanique provenant de plusieurs sources, comportant au moins une première et une deuxième machines électriques, et délivrant la puissance vers un arbre de sortie, le procédé consistant à désaccoupler la première machine électrique d'un premier point d'entrée du dispositif, puis à accoupler la première machine électrique à un second point d'entrée du dispositif, le procédé consistant, en outre, durant le désaccouplement de la première machine électrique, à compenser la puissance transmise par la première machine électrique avant son désaccouplement en modifiant la puissance transmise par la deuxième machine électrique des sources de façon à ce que la puissance délivrée par le dispositif reste linéaire. Le procédé selon l'invention est caractérisé en ce qu'il consiste à enchaîner les phases suivantes :
- annulation du couple fourni au dispositif par la première machine électrique,
- désaccouplement de la première machine électrique ;

Dans un mode de réalisation où trois sources de puissances dont un moteur thermique et deux machines électriques sont mises en oeuvre, le dispositif selon l'invention permet de modifier l'accouplement d'au moins une des machines électriques. Il est possible durant la période où une des machines électriques est désaccouplée, de modifier la puissance fournie par le moteur thermique pour conserver la linéarité de la puissance délivrée par le dispositif. Mais dans une variante préférée où les sources comportent au moins deux machines électriques, le procédé consiste à désaccoupler puis réaccoupler une première des machines électriques et à modifier la puissance fournie par la deuxième des machines électriques. Il est en effet généralement plus aisé de modifier la puissance fournie par une machine électrique que par le moteur thermique.
- synchronisation de la première machine électrique avec le second point d'entrée du dispositif ;
- accouplement de la première machine électrique au second point d'entrée,
et en ce que lors de l'annulation du couple, la puissance de la deuxième machine électrique reliée au dispositif est modifiée.

Il est possible de compléter le procédé après l'accouplement de la première machine électrique au second point d'entrée, en modifiant le niveau de puissance fourni par la deuxième machine électrique dont la puissance a été modifiée en fonction d'un niveau de puissance fourni par la première machine électrique au second point d'entrée de manière à ce que la puissance délivrée par le dispositif reste linéaire.

L'invention sera mieux comprise et d'autres avantages apparaîtront à la lecture de la description détaillée d'un mode de réalisation donné à titre d'exemple, description illustrée par le dessin joint dans lequel :
- la figure 1 représente schématiquement un dispositif de transmission pour lequel l'invention peut être mise en oeuvre ;
- les figures 2, 3 et 5 représentent une évolution dans le temps des puissances mécaniques disponibles au niveau des différents arbres d'entrée et de sortie du dispositif de la figure 1 ;
- la figure 4 représente un organigramme de changement de mode de fonctionnement du dispositif 1 ;
- et la figure 6 représente l'évolution dans le temps des vitesses de rotation d'une source de puissance par rapport à un arbre de destination.

Par souci de clarté, les mêmes éléments porteront les mêmes repères dans les différentes figures.

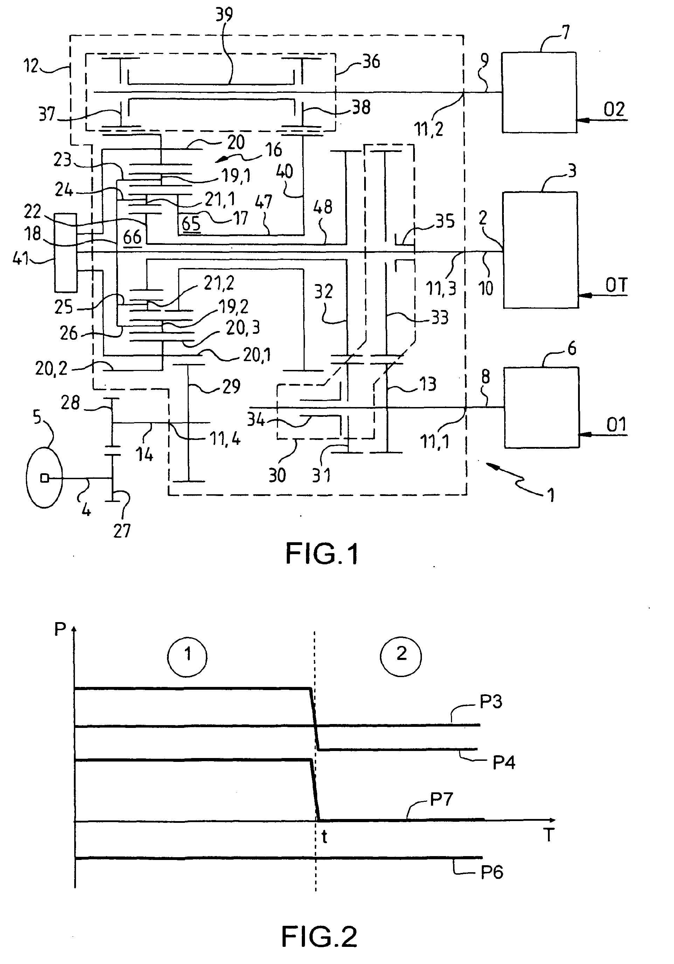

La figure 1 montre une représentation schématique d'un dispositif 1 de transmission entre une sortie 2 d'un moteur 3 thermique et un arbre 4 de roues 5.

Le dispositif 1 comporte une première machine 6 électrique et une deuxième machine 7 électrique. Les machines 6 et 7 comportent respectivement un arbre 8 et un arbre 9. Les arbres 8 et 9 sont respectivement reliés à une entrée 11.1 et 11.2 d'entraînement d'un ensemble 12 mécanique délimité par une ligne fermée discontinue. Le dispositif 1 comporte également un arbre 10 d'entrée relié à la sortie 2 du moteur 3 thermique et à une entrée 11.3 d'entraînement de l'ensemble 12 mécanique. Le dispositif 1 comporte également un arbre 14 de sortie relié à la fois à l'arbre 4 de roues 5 et à une sortie 11.4 d'entraînement de l'ensemble 12 mécanique. Pour plus de simplicité, la chaîne électrique reliant les machines 6 et 7 électriques entre elles n'est pas représentée.

Plus précisément, l'ensemble 12 mécanique comporte un train 16 dit de type Ravigneaux. Le train 16 présente quatre éléments de liaison mécanique : un pour l'arbre 10 d'entrée, un autre pour l'arbre 14 de sortie et les deux autres pour les arbres 8 et 9 des machines 6 et 7. Comme un train épicycloïdal classique, Le train 16 comporte un premier planétaire 17, un porte-satellites 18 portant des premiers satellites 19.1 et 19.2, et une couronne 20 qui engrènent mutuellement. En outre, le train 16 comporte des deuxièmes satellites 21.1 et 21.2, et un deuxième planétaire 22. Les deuxièmes satellites 21.1 et 21.2 sont portés par le porte-satellites 18 et engrènent à la fois avec les premiers satellites 19.1 et 19.2 et avec le planétaire 22.

On peut ainsi faire l'analogie du train 16 Ravigneaux avec deux trains 65 et 66 épicycloïdaux. Le premier train 65 comporte le premier planétaire 17, les premiers satellites 19.1 et 19.2 et la couronne 20. Le deuxième train 66 comporte le deuxième planétaire 22 et les deuxièmes satellites 21.1 et 21.2, mais est dépourvu de couronne. Les deux trains 65 et 66 comportent le porte-satellites 18 commun. Le porte-satellites 18 commun entraîne des axes 23-26 qui sont à la fois au contact du porte-satellites 18 et des satellites 19.1, 19.2, 21.1 et 21.2. Les satellites 19.1, 19.2, 21.1 et 21.2 sont respectivement susceptibles de tourner autour des axes 23, 24, 25 et 26. En variante, comme on le verra ci-après, les satellites 19.1 et 21.1, et les satellites 19.2 et 21.2 peuvent être solidaires entre eux et coaxiaux.

Dans ce mode de réalisation, l'arbre 10 d'entrée est relié à la fois à la sortie 2 du moteur 3 thermique et au porte-satellites 18 commun. L'arbre 4 de roues 5 est relié à la couronne 20 par l'intermédiaire d'un train d'engrenage formé par les roues 27 et 28, de l'arbre 14 de sortie et d'une roue 29. Plus précisément, la roue 27 accrochée à l'arbre 4 engrène avec la roue 28 accrochée à une extrémité de l'arbre 14 de sortie. Et la roue 29 accrochée à une autre extrémité de l'arbre 14 engrène avec la couronne 20.

Cette couronne 20 supporte à cet effet deux dentures extérieures 20.1 et 20.2, et une denture intérieure 20.3. La roue 29 engrène avec la denture extérieure 20.1. Les premiers satellites 19.1 et 19.2 engrènent avec la denture intérieure 20.3. Et comme on le verra ci-après, un pignon 37 engrène avec la denture extérieure 20.2.

L'arbre 8 de la première machine 6 est susceptible d'être relié soit au deuxième planétaire 22, soit à l'arbre 10 d'entrée. A cet effet, le dispositif 1 de transmission comporte un premier dispositif 30 de commutation délimité par une ligne fermée discontinue. Le premier dispositif 30 comporte les pignons 31 et 33 et deux crabots 34, 35 distincts. Le pignon 31 et le premier crabot 34 sont montés sur l'arbre 8, tandis que le pignon 33 et le deuxième crabot 35 sont montés sur l'arbre 10.

Ainsi, lorsque l'arbre 8 est relié au deuxième planétaire 22, le premier crabot 34 assure une liaison entre le pignon 31 et l'arbre 8, tandis que le pignon 33 est fou sur l'arbre 10. L'arbre 8 est alors relié au deuxième planétaire 22 par l'intermédiaire d'un engrenage formé par le pignon 31 et la roue 32, et d'un arbre 48 creux reliant la roue 32 au planétaire 22. Lorsque l'arbre 8 est relié à l'arbre 10 d'entrée, le deuxième crabot 35 assure une liaison entre le pignon 33 et l'arbre 10, tandis que le pignon 31 est fou sur l'arbre 8. L'arbre 8 est ainsi relié à l'arbre 10 par l'intermédiaire d'un engrenage formé par la roue 13 et le pignon 33.

L'arbre 9 de la deuxième machine 7 est susceptible d'être relié soit à l'arbre 4 de roues 5, soit au premier planétaire 17. A cet effet, le dispositif 1 comporte un deuxième dispositif 36 de commutation. Le deuxième dispositif 36 comporte les pignons 37, 38, ainsi qu'un troisième crabot 39 monobloc.

Lorsque l'arbre 9 est relié à l'arbre 4 de roues 5, le troisième crabot 39 assure une liaison entre le pignon 37 et l'arbre 9, tandis que le pignon 38 est fou sur l'arbre 9. L'arbre 9 est alors relié à l'arbre 4 par l'intermédiaire notamment du pignon 37, de la couronne 20 et de l'arbre 14 de sortie. Lorsque l'arbre 9 est relié au premier planétaire 17, le crabot 39 assure une liaison entre le pignon 38 et l'arbre 9, tandis que le pignon 37 est fou sur l'arbre 9. L'arbre 9 est alors relié au premier planétaire 17 par l'intermédiaire d'un engrenage formé par le pignon 38 et la roue 40, et d'un arbre 47 creux reliant la roue 40 au planétaire 17.

En variante, le premier dispositif 30 comporte un crabot monobloc et est monté uniquement sur l'arbre 8. Selon une autre variante, le deuxième dispositif 36 comporte deux crabots distincts montés sur l'arbre 9.

Les crabots 34, 35, 39 sont entraînés en rotation par l'arbre sur lequel ils sont montés, et sont capables de se déplacer en translation le long de cet arbre. En général, les crabots sont déplacés en translation par l'intermédiaire de fourchettes entraînées par un moteur à courant continu, non réprésentées.

Dans un mode de réalisation particulier, le porte-satellites 18 commun et la couronne 20 sont reliés à une pompe 41 à huile, par l'intermédiaire d'un mécanisme de roue libre (non représenté).

En variante, les arbres 8 et 9, l'arbre 10 d'entrée et l'arbre 14 de sortie 5 sont reliés à des éléments différents du train 16.

La figure 2 représente une évolution dans le temps des puissances mécaniques disponibles au niveau des différents arbres d'entrée et de sortie du dispositif. On considère un état du dispositif de transmission 1 dans lequel le crabot 34 assure une liaison entre l'arbre 8 de la machine électrique 6 et le pignon 31. Le crabot 39 assure une liaison entre l'arbre 9 de la machine électrique 7 et le pignon 37. Dans une première phase ① la première machine électrique 6 est par exemple liée en rotation au deuxième planétaire 22 et la deuxième machine électrique 7 est liée en rotation à l'arbre 4 par l'intermédiaire de la couronne 20 et de l'arbre de sortie 14. La première machine électrique 6 fournit au dispositif 1 une puissance mécanique P6 et la deuxième machine électrique 7 fournit au dispositif 1 une puissance mécanique P7. La machine électrique 6 fonctionne en mode générateur dans l'exemple représenté et la puissance qu'elle fournit au dispositif 1 est par convention négative. La machine électrique 7 fonctionne en mode moteur et la puissance qu'elle fournit au dispositif 1 est donc positive. Le moteur thermique 3 fournit quant à lui une puissance P3 au dispositif 1. Sur l'arbre 4, le dispositif 1 fournit une puissance P4 aux roues 5. La puissance P4 est la somme des puissances reçues par le dispositif à savoir P3, P6 et P7.

A un instant t, on décide de désaccoupler la machine électrique 7 de l'arbre 4. Pour se faire, on annule la puissance P7 fournie par la machine électrique 7 au dispositif 1 avant de réaliser le désaccouplement Le désaccouplement peut être effectué lors d'une phase repérée ② sur la figure 2. Dans cette nouvelle phase, les puissances P3 et P6 fournies au dispositif 1 par la machine électrique 6 et par le moteur thermique 3 sont identiques aux puissances fournies lors de la phase ①. En conséquence, la puissance P4 fournie aux roues 5 a chutée.

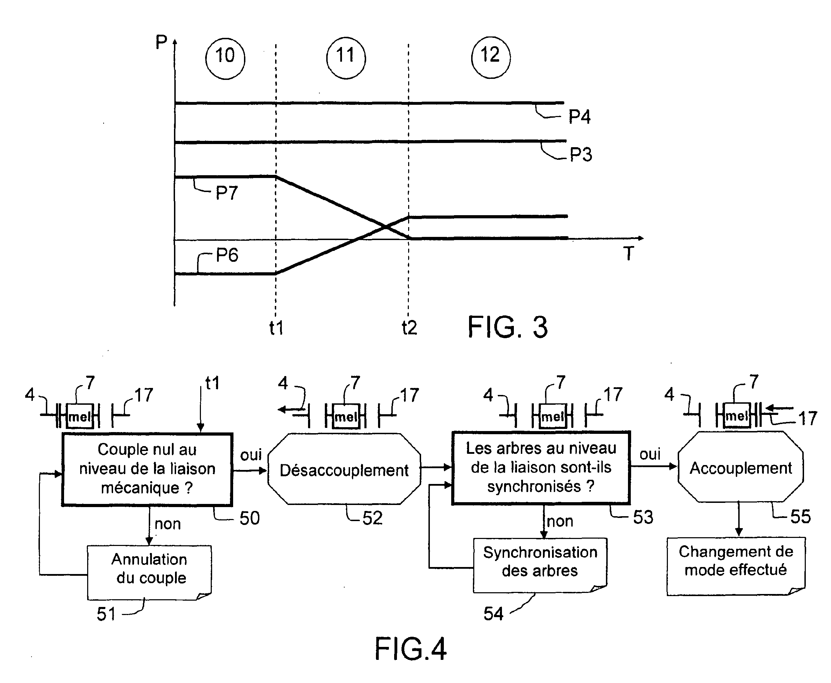

Sur la figure 3, le procédé selon l'invention est mis en oeuvre pour éviter la chutte de puissance observée sur la figure 2. La phase ⑩ est identique à la phase ① décrite précédemment. A un instant t1, lorsqu'on décide de désaccoupler la machine électrique 7 de l'arbre 4, on entre dans une phase ⑪ où on réduit jusqu'à annuler la puissance P7 fournie par la machine électrique 7. Pendant cette même phase ⑪, on augmente la puissance P6 fournie par la machine électrique 6 au dispositif 1 de façon à ce que la puissance P4 délivrée par le dispositif aux roues 5 reste constante. Une phase ⑫ débute à l'instant t2 à la suite de la phase ⑪. Durant la phase ⑫ la puissance fournie par la machine électrique 7 reste nulle, ce qui permet son désaccouplement et la puissance P6 fournie par la machine électrique 6 reste constante, au niveau où elle se situait en fin de phase ⑪. Dans l'exemple illustré par la figure 3, la puissance P4 délivrée par le dispositif 1 aux roues 5 reste constante. En pratique, un changement de mode de fonctionnement du dispositif 1, est souvent utile lorsque la puissance que l'on souhaite délivrer aux roues 5 évolue. Mais pour un confort de conduite d'un véhicule équipé du dispositif 1, et pour éviter de trop solliciter les différents organes mécaniques par lesquels transite la puissance fournie aux roues 5, il est important que l'évolution de la puissance fournie aux roues 5 évolue sans à-coup. On peut par exemple appliquer le procédé de l'invention dans le cas où la courbe représentant la puissance P4 sur la figure 3 évolue de façon continûment croissante dans le temps.

Pour mettre en oeuvre l'invention, on pourrait également modifier la puissance P3 fournie au dispositif 1 par le moteur thermique 3. Mais il est en général plus aisé de modifier la puissance d'un moteur électrique que la puissance d'un moteur thermique. La modification de la puissance fournie par une machine électrique est par exemple réalisée en commandant un onduleur placé entre des phases de la machine électrique et un bus à courant continu. Il existe des onduleurs réversibles permettant de passer, pour une machine électrique, d'un mode générateur à un mode moteur et inversement.

La figure 4 représente un organigramme de changement de mode de fonctionnement du dispositif 1. Au cours de ce changement, la machine électrique 7 passe d'un accouplement à l'arbre 4 à un accouplement au premier planétaire 17. Il est bien entendu possible de mettre en oeuvre cet organigramme pour la modification de l'accouplement de la machine électrique 6. A un instant t1, lorsqu'on décide de désaccoupler la machine électrique 7 de l'arbre 4, il est nécessaire d'annuler le couple produit par la machine électrique 7 au niveau de son arbre 9 avant de procéder au désaccouplement La commande d'annulation du couple est matérialisée par l'étape 50 et la vérification de l'annulation du couple est matérialisée par l'étape 51. Lorsque l'annulation du couple est effective, on peut entrer dans la phase ⑫ et désaccoupler l'arbre 4 de la machine électrique 7. Le désaccouplement est matérialisé par l'étape 52. Ensuite avant de procéder à l'accouplement de la machine électrique 7 et du premier planétaire 17, accouplement matérialisé par l'étape 55, au moyen du crabot 39, il est nécessaire de synchroniser la vitesse de rotation de l'arbre 9 de la machine électrique 7 avec la vitesse du premier planétaire 17. la synchronisation et la vérification de cette synchronisation sont matérialisées respectivement par les étapes 53 et 54. A l'issue de la synchronisation, l'accouplement est réalisé et le changement de mode de fonctionnement du dispositif devient effectif.

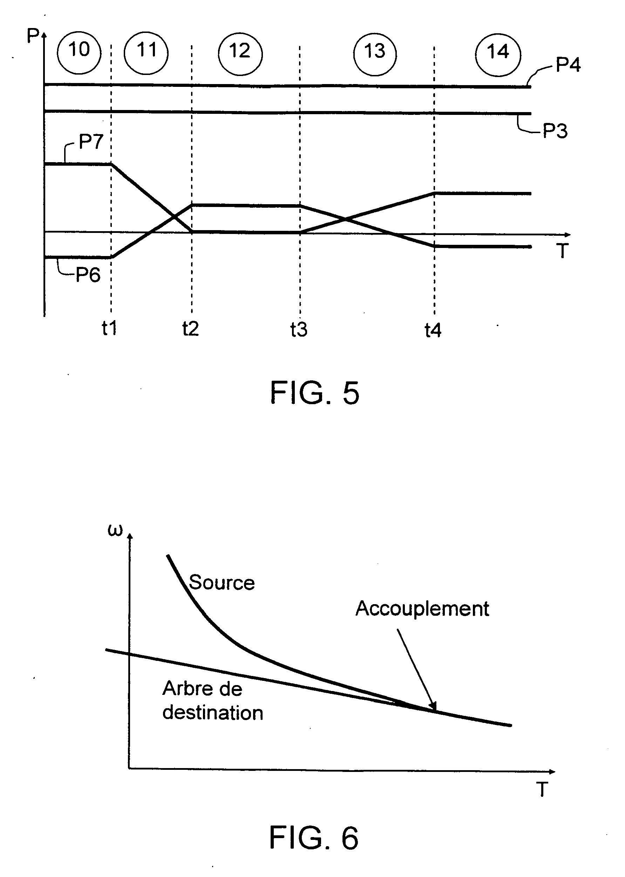

Au moment de l'accouplement de la machine électrique 7 et du premier planétaire 17, la puissance transmise par la machine électrique 7 au dispositif 1 est nulle. La fin de l'accouplement est réalisée à l'instant t3. A partir de cet instant, il est possible de modifier le niveau de puissance P6 fourni par la machine électrique 6 en fonction d'une évolution du niveau de puissance P7 fourni par la machine électrique 7 de manière à ce que la puissance P4 délivrée par le dispositif 1 reste constante, comme représenté sur la figure 5, ou encore linéaire. La modification des puissances P6 et P7 des machines électriques 6 et 7 après accouplement est illustée à l'aide de la figure 5. Cette modification des puissances P6 et P7 fournies par les deux machines électriques 6 et 7 intervient dans une phase ⑬ commençant à l'instant t3 et se terminant à un instant t4. La phase ⑬ est suivie d'une phase ⑭ pendant laquelle les puissances P3, P6 et P7 fournies au dispositif 1 par les différentes sources, machines électriques 6 et 7, et moteur thermique 3 restent constantes ou éventuellement linéaires.

La figure 6 représente l'évolution dans le temps de la vitesse de rotation w d'une source de puissance, par exemple de la machine électrique 7, par rapport à la vitesse d'un arbre de destination, par exemple le premier planétaire 17 pour permettre leur accouplement sans risque pour le crabot concerné, en l'occurrence le crabot 39.

## Revendications

1. Procédé de transmission de puissance dans lequel on met en oeuvre un dispositif (1) de transmission recevant de la puissance mécanique provenant de plusieurs sources (3, 6, 7), comportant au moins une première et une deuxième machines électriques (6, 7), et délivrant la puissance vers un arbre (4) de sortie, le procédé consistant à désaccoupler la première machine électrique (7) d'un premier point d'entrée (4) du dispositif (1), puis à accoupler la première machine électrique (7) à un second point d'entrée (17) du dispositif (1), le procédé consistant, en outre, durant le désaccouplement de la première machine électrique (7), à compenser la puissance (P7) transmise par la première machine électrique (7) avant son désaccouplement en modifiant la puissance (P6) transmise par la deuxième machine électrique (6) des sources de façon à ce que la puissance (P4) délivrée par le dispositif (1) reste linéaire, **caractérisé en ce qu'**il consiste à enchaîner les phases suivantes :
- annulation du couple fourni au dispositif (1) par la première machine électrique (7) ;
- désaccouplement de la première machine électrique (7) ;
- synchronisation de la première machine électrique (7) avec le second point (17) d'entrée du dispositif (1) ;
- accouplement de la première machine électrique (7) au second point (17) d'entrée ;
et **en ce que** lors de l'annulation du couple, la puissance (P6) de la deuxième machine électrique (6), reliée au dispositif (1), est modifiée.

2. Procédé selon la revendication 1, **caractérisé en ce que** le procédé consiste à désaccoupler puis réaccoupler la première machine électrique (7) et à modifier la puissance (P6) fournie par la deuxième machine électrique (6).

3. Procédé selon la revendication 2, **caractérisé en ce qu'**il consiste, après l'accouplement de la première machine électrique (7) au second point d'entrée (17), à modifier le niveau de puissance fourni par la deuxième machine électrique (6) dont la puissance (P6) a été adaptée en fonction d'un niveau de puissance (P7) fourni par la première machine électrique (7) au second point (17) d'entrée de manière à ce que la puissance (P4) délivrée par le dispositif (1) reste linéaire.

## Claims

1. Power transmission method in which a transmission device (1) is used, receiving mechanical power originating from several sources (3, 6, 7), comprising at least a first and a second electrical machine (6, 7), and delivering the power towards an output shaft (4), the method consisting in uncoupling the first electrical machine (7) from a first input point (4) of the device (1), then in coupling the first electrical machine (7) to a second input point (17) of the device (1), the method further consisting, during the uncoupling of the first electrical machine (7), in compensating for the power (P7) transmitted by the first electrical machine (7) before its uncoupling by modifying the power (P6) transmitted by the second electrical machine (6) of the sources such that the power (P4) delivered by the device (1) remains linear, **characterized in that** it consists in linking the following phases:
- cancelling the torque supplied to the device (1) by the first electrical machine (7);
- uncoupling the first electrical machine (7);
- synchronizing the first electrical machine (7) with the second input point (17) of the device (1) ;
- coupling the first electrical machine (7) to the second input point (17);
and **in that** on cancellation of the torque, the power (P6) of the second electrical machine (6), connected to the device (1), is modified.

2. Method according to Claim 1, **characterized in that** the method consists in uncoupling, then recoupling the first electrical machine (7) and in modifying the power (P6) supplied by the second electrical machine (6).

3. Method according to Claim 2, **characterized in that** it consists, after the coupling of the first electrical machine (7) to the second input point (17), in modifying the level of power supplied by the second electrical machine (6), the power (P6) of which was adapted as a function of a level of power (P7) supplied by the first electrical machine (7) to the second input point (17) so that the power (P4) delivered by the device (1) remains linear.

## Patentansprüche

1. Leistungsübertragungsverfahren, bei dem man eine Übertragungsvorrichtung (1) umsetzt, die die mechanische Leistung erhält, die von mehreren Quellen (3, 6, 7) kommt, die mindestens eine erste und eine zweite elektrische Maschine (6, 7) umfasst, und die Leistung zu einer Ausgangswelle (4) liefert, wobei das Verfahren darin besteht, die erste elektrische Maschine (7) von einem ersten Eingangspunkt (4) der Vorrichtung (1) abzukoppeln, dann die erste elektrische Maschine (7) an einen zweiten Eingangspunkt (17) der Vorrichtung (1) zu koppeln, wobei das Verfahren ferner darin besteht, während des Abkoppelns der ersten elektrischen Maschine (7) die Leistung (P7), die von der ersten elektrischen Maschine (7) vor ihrem Abkoppeln übertragen wird, zu kompensieren, indem die Leistung (P6), die von der zweiten elektrischen Maschine (6) der Quellen übertragen wird, derart zu ändern, dass die Leistung (P4), die von der Vorrichtung (1) geliefert wird, linear bleibt, **dadurch gekennzeichnet, dass** es darin besteht, die folgenden Phasen zu verketten:
- Annullieren des an die Vorrichtung (1) von der ersten elektrischen Maschine (7) gelieferten Moments;
- Abkoppeln der ersten elektrischen Maschine (7);
- Synchronisation der ersten elektrischen Maschine (7) mit dem zweiten Eingangspunkt (17) der Vorrichtung (1);
- Koppeln der ersten elektrischen Maschine (7) mit dem zweiten Eingangspunkt (17);
und dass beim Annullieren des Moments die Leistung (P6) der zweiten elektrischen Maschine (6), die an die Vorrichtung (1) angeschlossen ist, geändert wird.

2. Verfahren nach Anspruch 1, **dadurch gekennzeichnet, dass** das Verfahren darin besteht, die erste elektrische Maschine (7) abzukoppeln und dann anzukoppeln und die Leistung (P6), die von der zweiten elektrischen Maschine (6) geliefert wird, zu ändern.

3. Verfahren nach Anspruch 2, **dadurch gekennzeichnet, dass** es darin besteht, nach dem Koppeln der ersten elektrischen Maschine (7) an den zweiten Eingangspunkt (17) das Leistungsniveau zu ändern, das von der zweiten elektrischen Maschine (6) geliefert wird, deren Leistung (P6) in Abhängigkeit von einem Leistungsniveau (P7), das von der ersten elektrischen Maschine (7) an den zweiten Eingangspunkt (17) geliefert wird, derart angepasst wurde, dass die von der Vorrichtung (1) gelieferte Leistung (P4) linear bleibt.
